**Europäisches Patentamt**

**European Patent Office**

**Office européen des brevets**

(19)

(11) Numéro de publication: **0 113 347**
**B1**

# (12) FASCICULE DE BREVET EUROPÉEN

(45) Date de publication du fascicule du brevet:
**18.03.87**

(51) Int. Cl.⁴: **H 04 M 11/00**

(21) Numéro de dépôt: **83900175.7**

(22) Date de dépôt: **28.12.82**

(86) Numéro de dépôt international:
**PCT/BE 82/00026**

(87) Numéro de publication internationale:
**WO 83/02375 (07.07.83 Gazette 83/16)**

(54) DISPOSITIF DE TELECOMMANDE PAR LE RESEAU TELEPHONIQUE.

| | |
|---|---|
| (30) Priorité: **29.12.81 BE 206950** | (73) Titulaire: **ASSOCIATION INTERCOMMUNALE D' ELECTRICITE DU SUD DU HAINAUT, Rue du Commerce 4, B-4678 Rance (BE)** |
| (43) Date de publication de la demande: **18.07.84 Bulletin 84/29** | (72) Inventeur: **LECOHIER, Roland, Rue des Combattants 1, B-6478 Rance (BE)** |
| (45) Mention de la délivrance du brevet: **18.03.87 Bulletin 87/12** | (74) Mandataire: **van Malderen, Michel, p.a. FREYLINGER & ASSOCIES 85/042 Boulevard de la Sauvenière, B-4000 Liège (BE)** |
| (84) Etats contractants désignés: **AT BE CH DE FR GB LI LU NL SE** | |
| (56) Documents cité: **BE-A-691 645 DE-A-2 824 169 FR-A-2 074 678 FR-A-2 138 217 GB-A-1 235 481 US-A-4 206 444** | |

LIBER, STOCKHOLM 1987

## Description

La présente invention concerne un dispositif simple de télécommande utilisant comme support de transmission le réseau téléphonique public.

En plus des dispositifs de télécommande sans fil, on connaît plusieurs appareillages de commande à distance utilisant les lignes téléphoniques, notamment ceux décrits dans les documents suivants: US-A-4 206 444, GB-B-1 235 481, FR-A-2 074 678 et FR-A-2 138 217.

Le brevet US-A-4 206 444 concerne plus particulièrement une commande d'alimentation d'ordinateur qui nécessite même une ligne téléphonique spéciale. De ce fait, cet appareillage est destiné à un autre but que celui que vise la présente invention.

Le but de l'appareillage décrit dans le brevet GB-B-1 235 481 se distingue également de celui qui est poursuivi par la présente invention. En outre, sa conception et son mode de fonctionnement sont de nature à créer de nombreuses harmoniques parasites qui risquent de provoquer des commandes erronées.

Par les documents FR-A-2 074 678 et FR-A-2 138 217, on connaît des appareillages de télécommande utilisant comme support de transmission le réseau téléphonique et permettant de transmettre des signaux dans les deux sens entre deux postes. Ces appareils, dont le premier comporte une clé d'inversion manuelle, sont cependant d'une conception tendant à créer des harmoniques qui risquent de provoquer des commandes erronées. En outre, le système du codage des ordres est tel que la moindre déformation du message entraîne une interprétation fausse de l'ordre. Ce genre de dispositif ne convient donc pas pour des applications exigeant une grande sécurité de fonctionnement.

On connaît également des appareils de télécommande centralisée utilisant le réseau haute et basse tension comme support de transmission. De par leur principe de fonctionnement et de construction, ces appareils ne permettent pas de transmettre des signaux en sens inverse.

On constate donc qu'il existe un besoin de fournir des appareillages de télécommande travaillant avec une bonne sécurité de fonctionnement pour permettre des applications tels que la commande à distance de vannes ou de disjoncteurs par exemple, tout en utilisant une ligne téléphonique publique. On cherche donc à éviter l'utilisation d'une ou de plusieurs lignes téléphoniques privées ou spéciales destinées au transport de données complexes et nombreuses, comme une interconnexion entre ordinateurs, par exemple.

L'objet de la présente invention vise donc à fournir un dispositif simple de télécommande utilisant comme support de transmission le reseau téléphonique habituel et permettant de transmettre des signaux dans les deux sens entre deux endroits munis de postes téléphoniques classiques.

Le but visé par la présente invention est atteint par un dispositif de télécommande utilisant comme support de transmission le réseau téléphonique et permettant de transmettre des signaux dans les deux sens entre deux postes, dispositif composé d'un poste chef donnant les ordres, raccordé à un premier poste de téléphone et d'un poste subordonné recevant, exécutant les ordres et signalant l'exécution des ordres, raccordé à un deuxième poste de téléphone, la communication entre ces deux postes n'utilisant alternativement qu'un seul canal télégraphique pour l'aller et pour le retour et la ligne téléphonique reliant les deux postes étant une ligne téléphonique habituelle servant à la conversation de deux personnes, le poste chef comportant un nombre adéquat d'interrupteurs de commande, un générateur de fréquences créant deux niveaux de fréquences, à savoir le niveau I et le niveau 0 pour le signal de commande qui est transmis à la ligne téléphonique moyennant une amplification adéquate dans le but de la commande, caractérisé, à la différence du document FR-A-2 074 678, en ce que ledit poste chef comporte un dispositif de détection du signal de retour ainsi qu'un dispositif de décodage de ce signal et un affichage du signal de retour, les interrupteurs étant raccordés à un multiplexeur et codeur d'adresses et en ce que le poste subordonné comporte un répondeur téléphonique détectant la sonnerie du poste téléphonique et signalant au poste chef que le liaison est établie, une détection et un décodage du signal de commande envoyé par le poste chef ainsi qu'une amplification dudit signal envoyé à l'interface de sortie, un interface constatant l'exécution de l'ordre, multiplexeur et codeur du signal de retour, un générateur de fréquence créant les deux niveaux logiques pour le signal de retour qui est transmis à la ligne téléphonique moyennant une amplification adéquate.

Le dispositif de l'invention présente l'avantage d'être simple et, par conséquent, peu coûteux. Il peut également être installé par raccordement à n'importe quel poste téléphonique et être employé au niveau industriel comme dans le domaine privé, c'est-à-dire le ménage, pour commander des opérations telles que le chauffage d'une seconde résidence, par exemple.

La présente invention sera décrite plus en détail en référence aux figures annexées dans lesquelles des repères de référence identiques représentent des éléments identiques ou analogues.

Il est bien entendu que la description suivante est donnée à titre d'exemple et qu'elle ne limite en rien le cadre de la présente invention.

- La figure 1 représente le schéma bloc du poste chef;
- la figure 2 représente le schéma bloc du poste subordonné;

- la figure 3 représente un générateur de fréquences suivant la présente invention;
- la figure 4 représente un circuit de multiplexage;
- la figure 5 représente la forme des différents signaux;
- la figure 6 représente un mode d'exécution préféré d'un circuit de décodage et démultiplexage destiné au poste subordonné;
- la figure 7 représente un mode d'exécution d'un circuit d'amplification pour la commande des relais;
- la figure 8 représente un mode d'exécution du circuit d'amplification et de détection;
- la figure 9 représente le répondeur téléphonique du poste subordonné.

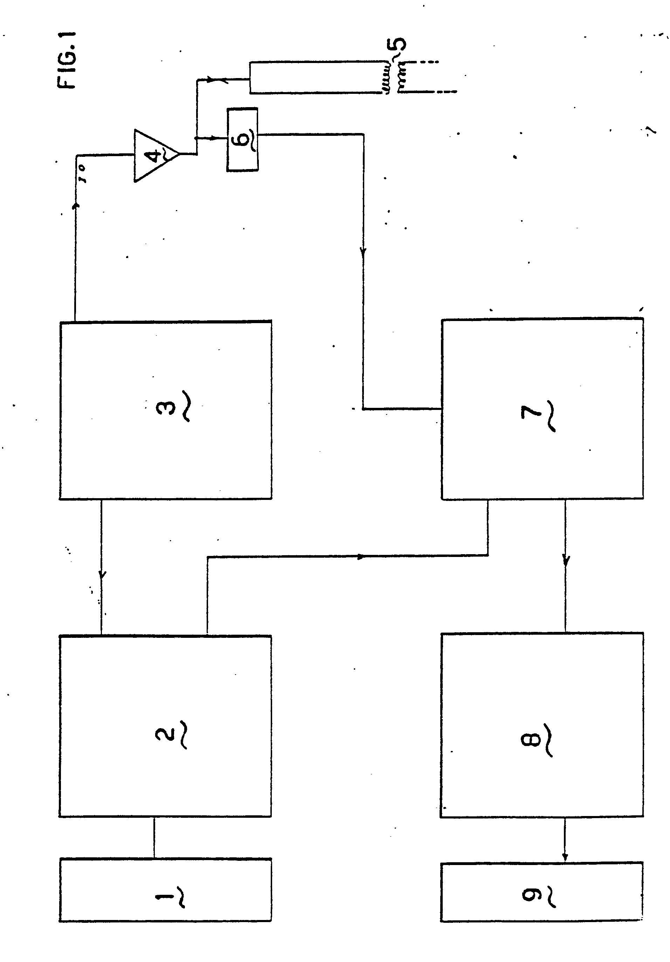

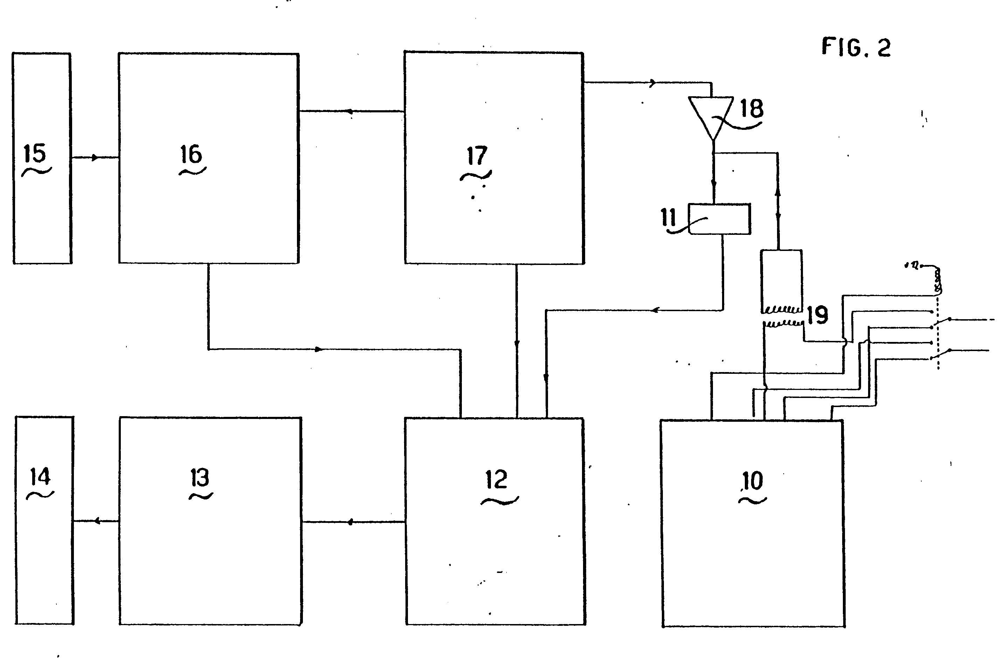

Afin de faciliter la compréhension du fonctionnement du dispositif de l'invention, les schémas bloc des poste chef et poste subordonné sont expliqués en premier lieu, en référence, respectivement, aux figures 1 et 2.

Suivant un mode d'exécution particulier, le poste chef donnant les ordres comporte 8 interrupteurs 1, de préférence 8 boutons poussoirs permettant de donner 8 ordres différents. Ces 8 signaux entrent dans un dispositif de multiplexage et de codage 2. Un générateur de fréquence 3 expliqué plus en détail ci-après permet de créer deux fréquences formant les deux niveaux logiques 0 et 1. Lorsque l'amplificateur 4 est rendu passant, le signal de commande peut être amplifié et envoyé sur la ligne téléphonique isolée galvaniquement du dispositif de l'invention par un transformateur 5.

Lorsque le poste subordonné "constate" que l'ordre correspondant au signal de commande a été exécuté, il envoie un signal de retour correspondant. Celui-ci est détecté dans le poste chef par le dispositif de détection 6. Ce signal de retour doit également être décodé en 7 avant d'être amplifié en 8 pour être visualisé par des diodes 9, par exemple.

De manière analogue, le poste subordonné représenté schématiquement à la figure 2, comporte un répondeur téléphonique 10 permettant de détecter la sonnerie du poste téléphonique lorsqu'on ne décroche pas le téléphone et renvoyant un message au poste chef signalant que la communication est établie. Le signal de commande provenant du poste chef est ensuite détecté en 11 avant de subir un démultiplexage et décodage en 12. Le signal de commande décodé est amplifié dans un amplificateur 13 qui est relié à l'interface de sortie 14 comportant les organes de commande, par exemple des relais.

Lorsque l'ordre a été exécuté, l'interface d'entrée 15 envoie un signal de retour codé correspondant à ladite commande et ayant subi un multiplexage en 16 sur la ligne téléphonique de manière analogue au fonctionnement du poste chef (générateur de fréquence 17 créant les deux niveaux logiques, l'amplificateur 18 et l'isolation galvanique 19). Ce signal de retour sera visualisé au poste chef comme décrit précédemment.

Suivant un mode d'exécution particulièrement avantageux de la présente invention, toutes les fréquences utilisées sont créées par division d'un fréquence pilote stabilisée.

De préférence, cette fréquence pilote est égale à 1 MHz et est divisée en 19 dans le circuit 20 pour obtenir 52.631 Hz, cette dernière étant divisée, premièrement, 3 fois par 16, dans le circuit 22, pour obtenir la fréquence horloge de 12,8 Hz, deuxièmement, par 28 pour obtenir le niveau logique 1 de 1880 Hz et, troisièmement, par 29 pour obtenir le niveau logique 0 de 1815 Hz.

En outre, au poste chef uniquement, la fréquence de 12,8 Hz est divisée deux fois par 5, dans le circuit 24, pour obtenir la base de temps du cycle complet de 0,5 Hz (2 secondes). A la fin de ces deux secondes, le circuit 26 délivre une impulsion de 0,15 seconde servant à la synchronisation des bases de temps au poste chef et au poste subordonné. En effet, en appliquant un signal positif à la borne 28, on remet à 0 tous les circuits 22 qui produisent la fréquence horloge de 12,8 Hz.

La fréquence de 52.631 Hz est divisée par 28 ou par 29 au moyen de deux circuits 30 et 32 dont les entrées de remise à 0 sont commandées de telle sorte que,

si S est au niveau haut et M est au niveau haut, les sorties valant 20 et 8 provoquent la remise à 0, il y a donc division par 28 et l'on obtient 1880 Hz à la borne 36;

si S est au niveau haut et M est au niveau bas, il faut à la fois les sorties valant 20, 8 et 1 pour provoquer la remise à 0 et on obtient une division par 29, donc 1815 Hz à la borne 36.

Donc, selon les tensions appliquées aux points M (modulation) et S (silence), on peut obtenir à la borne 36:
- aucun signal (Si S = 0, la remise a zero est activée)
- 1815 Mz correspondant au niveau 0
- 1880 Hz correspondant au niveau 1.

Les signaux sortant à la borne 36 sont rectangulaires, ils seront ensuite filtrés pour en éliminer les harmoniques.

Toutefois il est remarquable qu'au moment du changement d'état du point M, le diviseur continue à compter exactement comme si rien ne s'était passé et c'est seulement après 28 ou 29 impulsions à l'entrée qu'intervient la remise à 0; ceci a pour résultat un passage sans à coups de la fréquence de 1815 à 1880 et vice versa ce qui évitera de produire des harmoniques supplémentaire dans le signal envoyé sur la ligne téléphonique au moment des changements de fréquence.

Au poste chef uniquement, les tops de synchronisation produiront au point M une impulsion + de 0,15 sec ce qui amènera à la borne de sortie 36 une impulsion de 0,15 sec à la fréquence de 1880 Hz.

Cette impulsion va traverser tous les circuits de filtrage, d'amplification pour se retrouver aux bornes de la ligne téléphonique côté poste chef;

cette impulsion atteindra le posté subordonné avec un certain retard dû à la longueur de la ligne.

Cette impulsion sera détectée au poste chef ainsi qu'au poste subordonné et elle pourra être utilisée pour la remise à zéro (RAZ) des horloges tant du poste chef que du poste subordonné.

Le circuit 40 transmet le signal du point S au circuit d'amplification du signal avant l'envoi sur la ligne téléphonique afin de ramener le gain de l'amplificateur à zéro quand S est positif (silence).

Le circuit 42 sert à synchroniser les signaux de commande (d'ordre) et d'adresse sortant du multiplexage pour les envoyer sur la ligne téléphonique sous forme d'impulsions de fréquences audibles. Dans le cas du poste subordonné le circuit logique 44 comporte trois entrées connectées entre elles et au signal indiquant la série deux expliquée ci-dessous. Ce signal permet d'indiquer au poste chef que l'ordre a été exécuté.

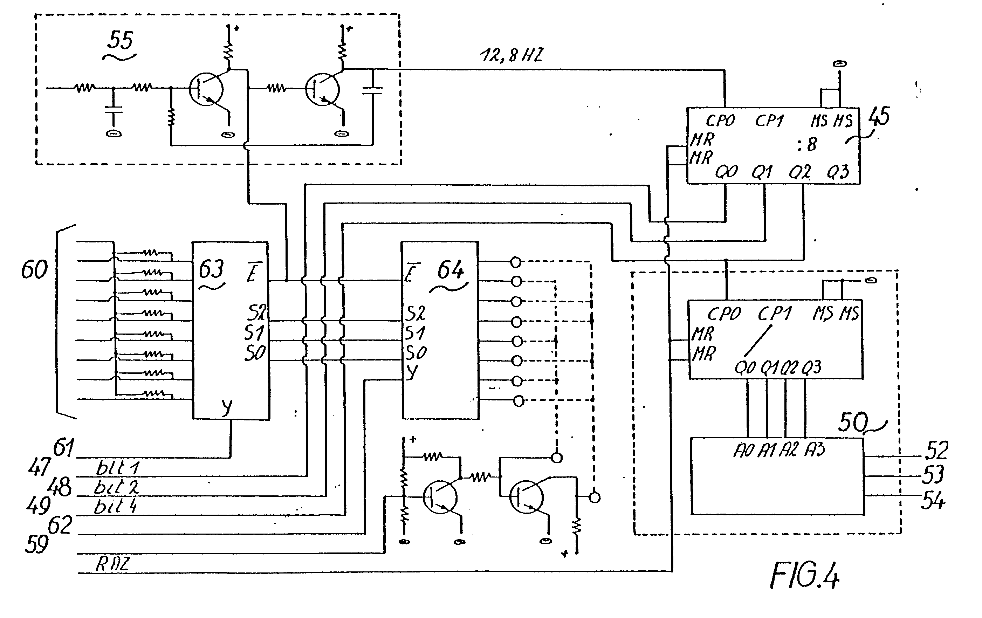

La figure 4 représente un exemple de multiplexage et de codage d'adresse.

Après avoir subi un retard de 0,1 msec, dans le circuit 55, l'impulsion horloge de 12,8 Hz est d'abord divisé par 8 dans le circuit 45 pour donner 3 séries de 8 impulsions numérotables de 0 à 7 grâce aux signaux dénommés bit 1, bit 2 et bit 4 obtenus en Q0, Q1 et Q2 et que nous retrouvons aux bornes de sortie 47, 48 et 49.

Ensuite, le circuit 50 offre la possibilité de numéroter les séries de 8 impulsions soit série 0, 1 et 2 que nous obtenons en logique négative aux bornes de sortie 52, 53 et 54.

Les séries 0, 1 et 2 signifient qu'une serie - la série 0 - est réservée au signal de commande (de l'ordre), qu'une autre série - la série 1 - est réservée au codage d'adresse et qu'une troisième série - la série 2 - est réservée au signal de retour, qui ne comporte que l'adresse de la commande pour signaler à l'opérateur du poste chef que l'ordre a été exécuté.

Etant donné que les séries 0 et 1 sont superflues pour le signal de retour, ceci explique que les entrées du circuit logique 44 sont courcircuitées dans le cas du poste subordonné.

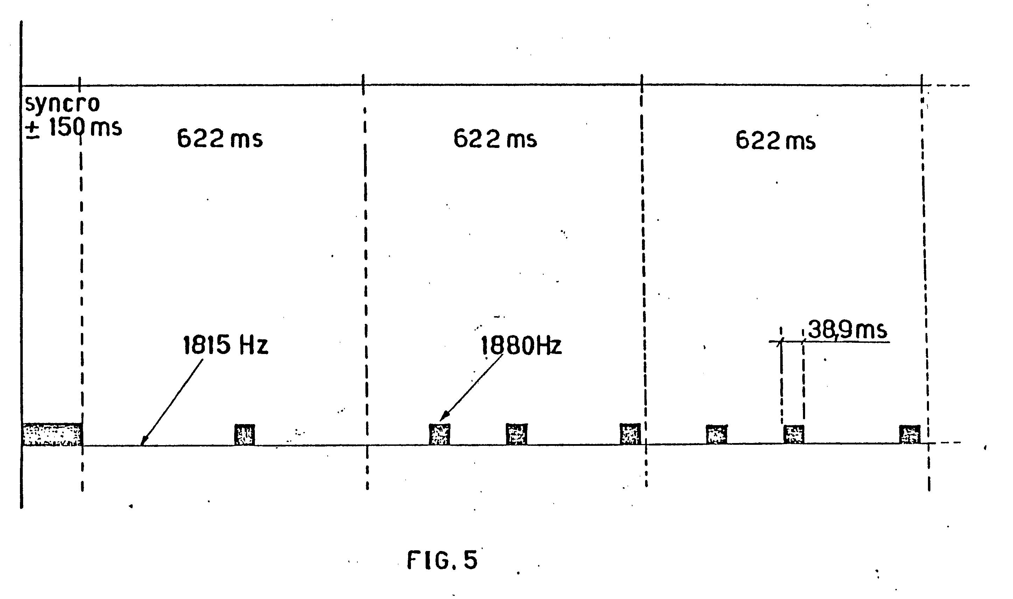

La composition du message est donc la suivante (figure 5):

Le cycle débute par un top de synchronisation émis par le poste chef pendant 0,15 sec, ensuite pendant 622 msec le poste chef émet la série 0 comprenant 8 bits dont 1 seul peut être au niveau 1. Tout message série zéro comprenant plus de 1 bit + serait refusé.

Ensuite, pendant encore 0,622 sec, le poste chef émet la série 1 comprenant 8 bits formant une "adresse" codée: cette adresse doit comprendre 3 bits + et 5 bits - dans un ordre bien défini qui doit être reconnu par le poste subordonné. En cas d'absence d'ordre à transmettre, la série 1 adresse est inversée (bits - au lieu de bits + et vice versa).

Pour pouvoir exécuter un ordre, le poste subordonné doit recevoir:
- 1 bit + dans la série 0 ordres; (qu'il exécutera)
- 3 bits + correspondant au code choisi dans la série 1 adresse
- au total 4 bits +.

Tout message ne répondant pas à ces 3 points est refusé.

Pendant les 622 millisecondes suivantes, le poste subordonné enverra un message de 8 bits dont chacun a une signification et correspond aux 8 signaux à transmettre.

Les 77 millisecondes qui suivent en attendant un nouveau top de synchronisation sont inutilisées; en fait, elles servent à attendre le temps perdu par les signaux le long des lignes téléphoniques.

Cette manière de procéder présente plusieurs avantages:
- grande simplicité des signaux
- utilisation d'un seul canal télégraphique. Ceci pourrait même permettre, moyennant une adjonction d'un filtre de bande, d'utiliser la ligne simultanément pour une conversation téléphonique et une télécommande.

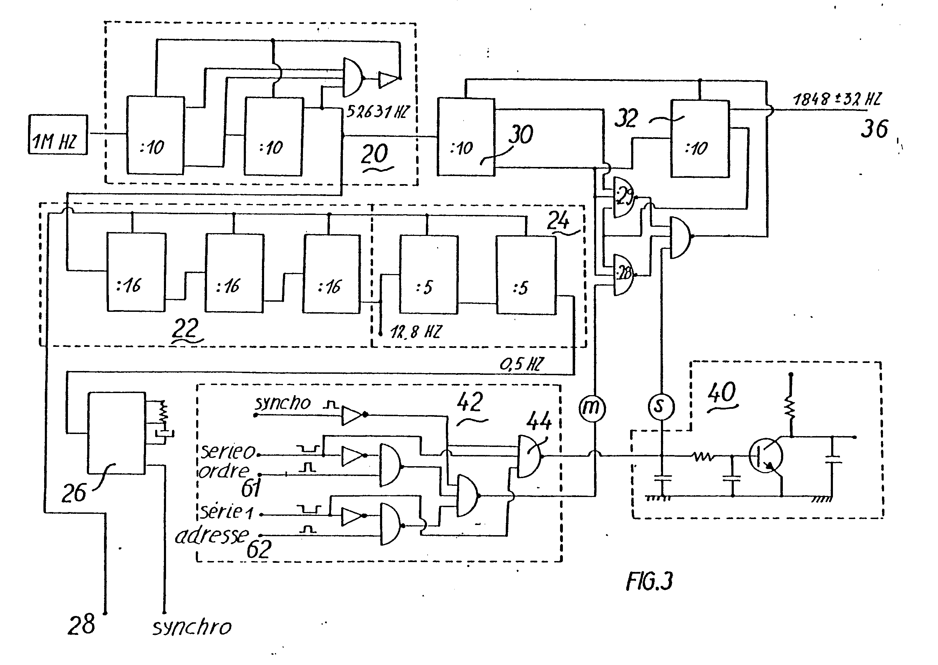

Les circuits de codage du signal donné par un bouton poussoir, par exemple, actionné par l'opérateur au poste chef, est d'un genre classique. Le repère 60 indique les 8 entrées provenant d'un interface d'entrée comme celui représenté schématiquement à la figure 1, repère 1. Le fait d'appuyer sur un bouton poussoir fait changer la polarité de la borne d'entrée 59 ce qui a pour effet d'inverser les polarités des 8 entrées du circuit 64. Les connexions dessinées en pointillés se font soit au moyen d'un socket et d'une fiche dont le câblage peut être personnalisé pour chaque utilisation, chacun ayant un message "adresse" différent, soit au moyen de 8 mini-interrupteurs inverseurs. Les signaux 61, 62 issus, respectivement, des circuits de codage de l'ordre 63 et du circuit de codage de l'adresse 64, sont transmis au circuit 42 (figure 3). Les impulsions de synchronisation arrivant également au circuit 42, il en résulte au point M un message comme décrit précédemment qui est envoyé sur la ligne téléphonique si S est positif.

Dans le cas du poste subordonné, le circuit de la figure 4 ne comporte qu'un seul circuit 63 permettant de coder l'état d'interrupteurs, par exemple des contacts de relais alimentés par les 8 appareils commandés, afin de signaler à l'opérateur du poste chef que l'ordre a été exécuté à ladite adresse.

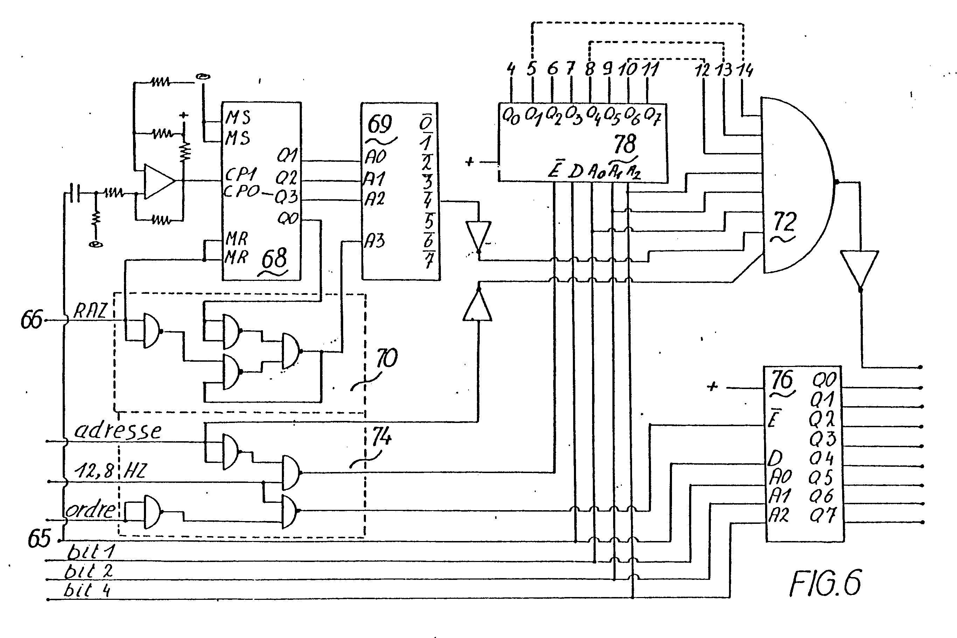

En se référant à la figure 6 qui représente un mode d'exécution possible d'un circuit de décodage et de démultiplexage destiné au poste subordonné, on applique les impulsions détectées à la borne d'entrée 65 tandis que les impulsions de synchronisation sont appliquées à la borne d'entrée 66 où elles servent à remettre à zéro le compteur constitué des circuits 68 et 69 auxquels on a ajouté un circuit à mémoire 70 intercalé dans la transmission du 8ème bit entre la sortie du circuit intégré 68 et l'entrée du circuit intégré 69 de telle sorte qu'à la sortie du circuit intégré 69, on ne puisse obtenir de signal que si on a réellement compté 4 impulsions détectées depuis la dernière remise à zéro. Ce signal sera appliqué sur une des 8 entrées du circuit logique intégré 72.

L'horloge à 12,8 Hz, les signaux série 0 (ordre) et série 1 (adresse) sont appliqués au circuit de démultiplexage, un circuit 74 envoie alors vers les deux circuits démultiplexeurs 76, 78 les signaux de déverrouillage qui vont leur permettre de transférer sur leurs bornes de sortie correspondantes, les mémorisations des états des impulsions décodées pendant les 8 bits de chacune de leur série propre. Pour être certain de les reverrouiller avant le changement de numérotation des bits (changement d'état des signaux bit 1, bit 2 et bit 4) on a été amené à retarder quelque peu ce changement d'état, c'est la raison de la temporisation exposée ci-dessus (circuit 55)-circuits horloges, temporisation de 0,1 milliseconde - qui était provoquée avant de diviser par 8 la fréquence horloge de 12,8 Hz.

Sur les 8 sorties du circuit de démultiplexage 76 correspondant à la série ordre, on obtient éventuellement un seul signal + qui sera transmis aux circuits de confirmation d'ordre.

Sur les 8 sorties de l'autre circuit de démultiplexage 78 correspondant à la série adresse, on obtient éventuellement l'adresse codée. Les trois signaux + correspondant à l'adresse demandée sont transmis à trois entrées du circuit 72 par les connexions représentées en pointillés, connexions qui, comme dans le cas du démultiplexage se font au moyen de socket et fiche avec câblage codé ou bien par des mini-interrupteurs.

Le circuit 72 reçoit donc sur ses 8 entrées: le codage adresse; bit 1, bit 2, bit 4; la série adresse; la confirmation qu'il y a eu exactement 4 impulsions +.

Dans ce seul cas et à cet instant précis, soit juste à la fin du message émis par le poste chef, le circuit 72 transmet, à la borne de sortie, une impulsion de 3 msec, confirmant que l'on peut exécuter l'ordre décodé par le circuit 76.

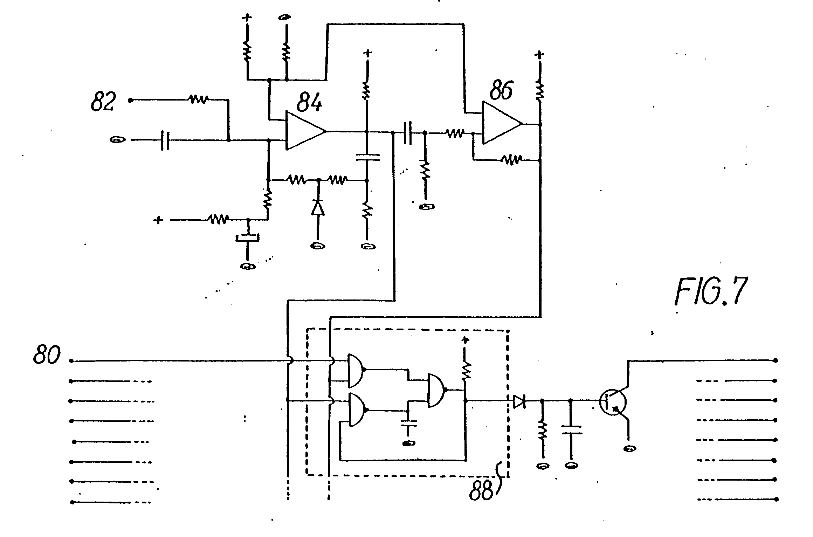

Quand apparaissent simultanément aux entrées 80 par exemple et 82 de la figure 7 représentant l'amplification et la commande des relais, respectivement un ordre à exécuter et sa confirmation, le circuit 84 mémorise une impulsion de 0,5 sec tandis qu'en même temps, le circuit 86 envoie une impulsion de 0,1 msec qui permet de mémoriser dans un circuit logique 88 un signal qui fera enclencher le relais de sortie, ce signal restera mémorisé pendant toute la durée de l'impulsion de 0,5 sec générée par le circuit 84. La partie supérieure de la figure 7 est commune aux 8 commandes, tandis que le circuit 88 et suivants sont reproduits 8 fois.

Grâce à ce procédé, un ordre n'est éxécute, et un seul à la fois, que s'il a reçu confirmation d'exécution; en outre, si le relais de sortie commande par exemple un appareil générateur de parasites industriels tellement important qu'il soit capable de perturber certains circuits, ces parasites ne pourraient se manifester avant la fin de l'impulsion de 0,1 msec ci-dessus et donc un ordre parasite ne pourrait être exécuté.

Au poste chef, la configuration du circuit de la figure 6 est beaucoup plus simple. En effet, ce circuit ne comporte qu'un seul circuit intégré 76 qui décode uniquement les 8 signaux de la série signalisation émise par le poste subordonné. Chacun de ces 8 signaux alimente une diode LED ou une lampe témoin servant à visualiser l'état de signal transmis.

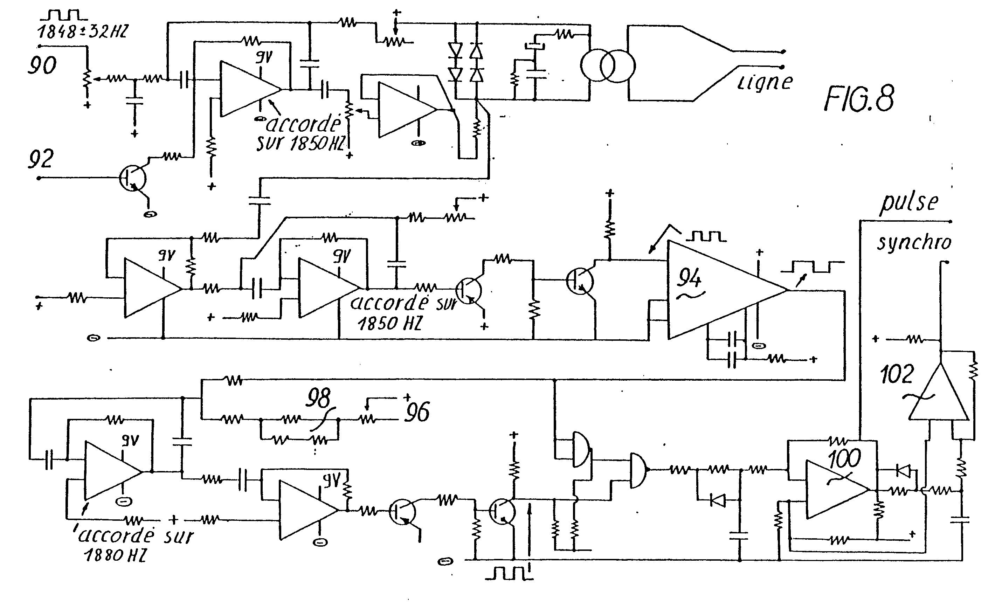

En se référant, à présent, à la figure 8, on constate que les signaux rectangulaires émis par le générateur de fréquences entrent à la borne 90. Ils passent par un ampli accordé sur la fréquence centrale de 1848 Hz. le gain de cet ampli peut être ramené à zéro en appliquant à l'entrée 92 une tension positive provenant du point S (silence) comme décrit précédemment.

Le circuit de détection commence par un ampli saturable suivi d'un ampli accordé sur la fréquence centrale de 1848 Hz et ensuite 2 transistors montés en amplis saturés de sorte qu'à l'entrée du circuit 94, on obtienne des signaux carrés quel que soit le niveau du signal sur la ligne téléphonique (entre + 10 et - 45 db).

Le circuit 94 produit alors des signaux rectangulaires calibrés de telle sorte que la partie + fasse ± 60 % et la partie -, 40 % d'une période.

Ces signaux sont envoyés d'une part dans un comparateur et d'autre part à l'entrée d'un ampli accordé sur la fréquence "OUI" de 1880 Hz.

A côté du potentiomètre de réglage de fréquence 96, on a disposé deux thermistances 98 qui stabilisent la fréquence d'accord entre -15° et +70° C.

A la fréquence d'accord, les signaux d'entrée et de sortie sont déphasés de 180°, après passage dans trois amplificateurs saturés, on obtient sur la deuxième entrée du comparateur un signal carré qui est en phase avec le signal rectangulaire issu du circuit 94 uniquement a la fréquence "OUI" de 1880 Hz, pour toute autre fréquence les deux signaux sont déphases et ce déphasage provoque à la sortie du comparateur de phase des impulsions négatives; si par contre les deux signaux sont en phase (il s'agit, en fait, d'un signal carré et d'un signal rectangulaire), aucune impulsion négative n'apparait à la sortie du comparateur. Ces impulsions négatives éventuelles déterminent l'état de la sortie d'un bistable 100 qui fournit ainsi une détection de fréquence + à 1880 Hz et de fréquence - à 1815 Hz.

Ensuite le bistable 102 sert à filtrer les impulsions selon leur durée, seules celles de 150 msec (impulsions de synchronisation) apparaissent à la sortie.

La caractéristique remarquable de cette détection par comparaison de signaux carrés et rectangulaires est qu'en réglant la largeur des impulsions rectangulaires, on peut régler également la largeur de bande des fréquences détectées.

Tout cet ensemble de détections ne comporte aucune bobinage et la mise au point se fait en réglant deux potentiomètres.

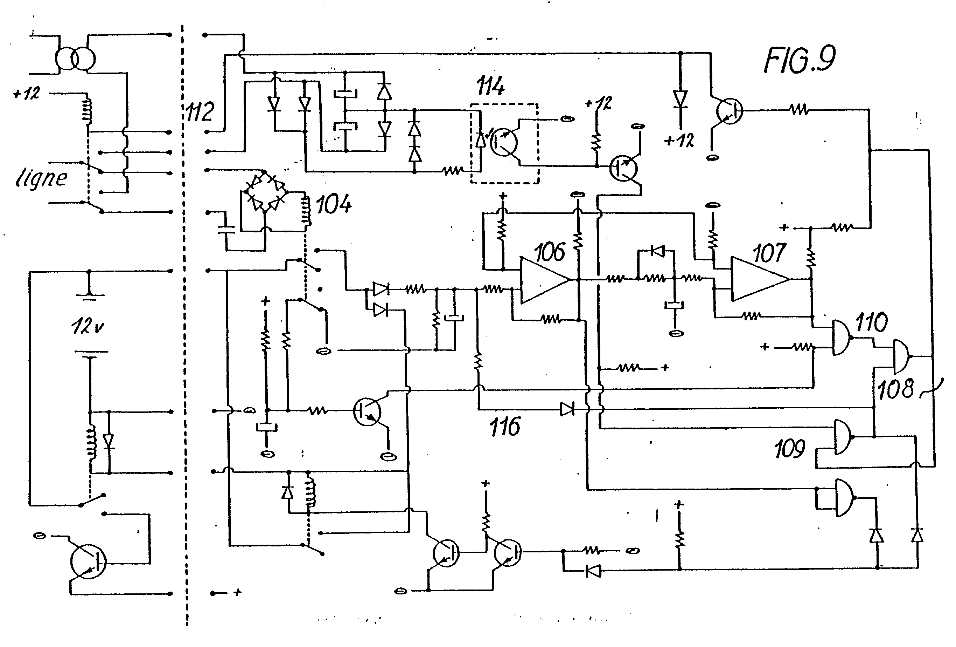

Le dispositif de répondeur téléphonique disposé dans le poste subordonné est représenté à la figure 9.

Une caractéristique du poste subordonné est qu'à l'état de veille, il ne consomme rien. En effet, c'est seulement en détectant le courant de sonnerie téléphonique dans un relais 104 que l'on enclenche le relais d'alimentation 12 V et en même temps un relais temporisé 106 qui conserve l'alimentation 12 V pendant 4 secondes, soit le temps suffisant pour attendre le coup de sonnerie suivant.

Si les coups de sonnerie se succèdent sans interruption pendant au moins 20 secondes, la sortie du circuit 107 va devenir positive et au coup de sonnerie suivant (car ici il faut être certain que le correspondant appelant n'a pas raccroché), la sortie 108 de la porte ET 110 va envoyer par la borne 112 l'ordre d'enclencher la ligne téléphonique afin de brancher la télécommande.

Aussitôt, le courant continu de la ligne téléphonique est détecté dans l'optocoupleur 114 qui, via des portes logiques 108 et 109, par exemple, commandera l'automaintien du branchement à la ligne téléphonique.

Quand le correspondant raccroche, la brève coupure du courant continu de la ligne téléphonique qui s'en suit a pour effet de faire cesser l'automaintien par opto-coupleur et circuit logique ayant pour conséquence, la coupure de l'alimentation 12 V.

Si, par hasard, le correspondant appelant raccrochait juste après le moment de la mise sous branchement de la ligne téléphonique sur la télécommande, la connexion 116 éviterait l'automaintien de l'alimentation 12 V en eliminant ainsi le risque de maintien intempestif du branchement de la télécommande sur la ligne téléphonique.

La coupure de l'interrupteur du poste chef a pour effet de libérer la ligne téléphonique et de déconnecter également le poste subordonné. D'autre part, l'appareil subordonné étant auto-maintenu par le courant continu de la ligne téléphonique, il est toujours loisible à une personne qui s'y trouverait pendant une transmission de signaux, de décrocher le combiné téléphonique et de couper l'alimentation de l'appareil de télécommande et entrer directement en communication avec le poste chef où, toutes les lampes de signalisation s'éteignant par manque de signaux en retour, l'opérateur serait averti du changement de destination de la liaison téléphonique.

Le fonctionnement typique du dispositif est comme suit:

L'opérateur du poste chef décroche son combiné téléphonique et appelle le poste subordonné.

Au poste subordonné, l'appareil téléphonique sonne normalement 6 fois ce qui permet à l'occupant éventuel de décrocher et de répondre.

Après 6 coups de sonnerie, le poste subordonné se branche sur la ligne et envoie un signal d'identification. Si au bout de 10 secondes, le poste subordonné n'a pas reconnu le signal du poste chef, il peut se déconnecter (cas d'un appel venant d'une tierce personne).

Au poste chef, dès réception du signal émis par le poste subordonné, les lampes témoin concernées s'allument, et l'opérateur peut alors envoyer ses commandes en poussant sur les boutons et verifier sur les lampe si les ordres ont bien été transmis.

Si l'opérateur coupe l'alimentation, le poste chef se coupe et le poste subordonné ne recevant plus de signaux se coupe à son tour.

On peut également prévoir un système d'alarme qui consisterait en un appel automatique par le poste subordonné vers le poste chef pour lui signaler un changement d'état. (Application aux systèmes de veille pour surveiller la sécurité d'une installation).

On peut également prévoir une identification par un codage simple de quelques signaux, la programmation de ce codage pourrait se faire par exemple au moyen d'un jeu d'interrupteurs miniatures qui seraient à ouvrir ou à fermer une fois pour toutes lors de l'installation de façon identique au poste chef et au poste subordonné de telle sorte qu'un appareil fabriqué en série serait personnalisé pour l'utilisateur.

Avantageusement, le dispositif peut encore comporter une certaine redondance dans les signaux transmis, redondance limitée, par exemple au lieu de transmettre, pour les 8 ordres, simplement un chiffre de zéro à 7, on transmettrait un jeu de 3 chiffres, les 8 jeux de 3 chiffres étant sélectionnés de façon à rendre une confusion très improbable.

La description d'un mode d'exécution préféré donnée ci-dessus n'est évidemment donnée qu'à titre d'exemple et ne limite en rien la portée de la présente invention.

On peut, bien entendu prévoir de nombreuses modifications des circuits sans sortir du cadre de l'invention.

Ainsi l'interface d'entrée 15 peut être de divers types; elle peut, par exemple, avantageusement fonctionner par opto-couplage.

Il faut, bien entendu, prévoir une série de circuits annexes comme, par exemple, des alimentations stabilisées, des chargeurs de batterie etc. Ces circuits sont classiques et n'ont pas été commentés dans le présent mémoire.

Suivant l'invention, on peut également prévoir un mode d'exécution comportant par exemple 16 commandes et 24 signaux de retour. Cet appareil fonctionne suivant le même principe; il suffit de prévoir les connexions pour les bits supplémentaires.

Le dispositif de l'invention peut être utilisé à des fins diverses pour commander à distance, au départ du domicile, des disjoncteurs ou également, par exemple le chauffage dans la seconde résidence. On lui trouve également une application industrielle consistant à commander à partir d'une centrale des organes d'une sous-centrale, par exemple des centrales de pompage ou même électriques.

## Revendications

1. Dispositif de télécommande utilisant comme support de transmission le réseau téléphonique et permettant de transmettre des signaux dans les deux sens entre deux postes, dispositif composé d'un poste chef (Fig.1) donnant les ordres, raccordé à un premier poste de téléphone et d'un poste subordonné (Fig.2) recevant, exécutant les ordres et signalant l'exécution des ordres, raccordé à un deuxième poste de téléphone, la communication entre ces deux postes n'utilisant alternativement qu'un seul canal télégraphique pour l'aller et pour le retour et la ligne téléphonique reliant les deux postes étant une ligne téléphonique habituelle servant à la conversation de deux personnes, le poste chef comportant un nombre adéquat d'interrupteurs de commande, un générateur de fréquence créant deux niveaux de fréquences, à savoir le niveau I et le niveau 0 pour le signal de commande qui est transmis à la ligne téléphonique moyennant une amplification adéquate dans le but de la commande, caractérisé en ce que ledit poste chef comporte un dispositif de détection du signal (6) de retour ainsi qu'un dispositif de décodage (7) de ce signal et un affichage du signal de retour (9), les interrupteurs de commande étant raccordés à un multiplexeur et codeur d'adresses, et en ce que le poste subordonné comporte un répondeur téléphonique (10) détectant la sonnerie du poste téléphonique et signalant au poste chef que la liaison est établie, une détection et un décodage (12) du signal de commande envoyé par le poste chef ainsi qu'une amplification (13) dudit signal envoyé à l'interface de sortie (14), un interface (15) constatant l'exécution de l'ordre, un multiplexeur et codeur (16) du signal de retour, un générateur de fréquences (17) créant les deux niveaux logiques pour le signal de retour qui est transmis à la ligne téléphonique moyennant une amplification adéquate (18).

2. Dispositif suivant la revendication 1, caractérisé en ce que le poste chef comporte 8 interrupteurs de commande raccordés à un multiplexeur et codeur d'adresses, permettant de donner 8 ordres différents, non simultanément, et 8 signalisations témoins permettant de contrôler si l'ordre a été exécuté.

3. Dispositif suivant la revendication 1, caractérisé en ce que le poste chef comporte 16 interrupteurs de commande raccordés à un multiplexeur et codeur d'adresses, permettant de donner 16 ordres différents, non simultanément et 24 signalisations témoins.

4. Dispositif suivant l'une quelconque des revendications 1 à 3, caractérisé en ce que le générateur de fréquence (3, 17) produit les fréquences utilisées par division d'une fréquence pilote stabilisée à 1 MHz en 19 dans un circuit diviseur (20) pour obtenir 52.631 Hz, cette dernière étant divisée, premièrement, 3 fois par 16 (22) pour obtenir la fréquence horloge de 12,8 Hz, deuxièmement, par 28 pour obtenir le niveau logique 1 de 1880 Hz et, troisièmement, par 29, pour obtenir le niveau logique 0 de 1815 Hz.

5. Dispositif suivant l'une quelconque des revendications précédentes, caractérisé en ce que, au poste chef, la fréquence de 12,8 Hz est divisée deux fois par 5 (24) pour obtenir la base de temps du cycle complet de 0,5 Hz et en ce que, à la fin de chaque cycle, un circuit (26) délivre une impulsion de 0,15 seconde servant à la synchronisation des bases de temps des deux postes.

6. Dispositif suivant l'une quelconque des revendications précédentes caractérisé en ce que le codage du message est monté de sorte qu'on ait une série 0 qui est réservée au signal de commande, une série 1 qui est réservée au codage de l'adresse et une série 2 qui est réservée au signal de retour, les trois séries se succédant dans le temps afin de n'utiliser qu'une seule ligne téléphonique pour l'aller et le retour.

7. Dispositif suivant l'une quelconque des revendications précédentes, caractérisé en ce que les circuits sont montés de manière à ne pas utiliser de bobinage.

8. Dispositif suivant l'une quelconque des revendications précédentes, caractérisé en ce que l'interface d'entrée (15) comporte des ensembles opto-coupleurs.

9. Dispositif suivant l'une quelconque des revendications précédentes, caractérisé en ce qu'il comporte une identification qui consiste en un jeu d'interrupteurs miniatures qui sont ouverts ou fermés une fois pour toutes lors de l'installation.

10. Dispositif suivant l'une quelconque des revendications précédentes, caractérisé en ce que la détection du signal (11, 6) est une détection à discrimination de fréquence par superposition de signaux rectangulaires provenant d'amplificateurs accordés, ces signaux ne coïncidant que pour la fréquence d'accord.

## Patentansprüche

1. Fernsteuerungsvorrichtung, die das Fernsprechnetz als Übertragungsmittel benutzt und es erlaubt Signale in beiden Richtungen zwischen zwei Telephongeräten zu übertragen, wobei die Fernsteuerungsvorrichtung aus einer die Befehle erteilenden und an einem ersten Telephonapparat angeschlossenen Hauptstelle (Fig. 1) sowie aus einer die Befehle empfangenden, diese ausführenden und die Ausführung der Befehle anzeigenden, an einem zweiten Telephonapparat angeschlossenen Nebenstelle (Fig. 2) besteht, wobei die Übertragung zwischen diesen beiden Stellen alternativ nur einen Telegraphenkanal für die Hin- und Herübertragung verwendet, und wobei die die beiden Stellen verbindende Telephonleitung eine galäufige für den Sprechverkehr zweier Personen verwendete Telephonleitung ist, wobei die Hauptstelle eine geeignete Anzahl Schalter aufweist, wobei ein Frequenzgenerator zwei Frequenzpegel herstellt, nämlich Pegel I und Pegel 0, für das Befehlssignal, das mittels geeigneter Verstärkung der Telephonleitung zur Steuerung zugeführt wird, dadurch gekennzeichnet, daß die gennante Hauptstelle eine Vorrichtung (6) zur Erfassung des Rücksignals sowie eine Dekodiervorrichtung (7) dieses Signals und eine Anzeige des Rücksignals (9) aufweist, wobei die Schalter an einem Multiplexer und Adressenkoder angeschlossen sind, und daß die Nebenstelle einen das Telephonklingelsignal erfassenden und der Hauptstelle das Zustandekommen der Verbindung meldenden Telephonanrufbeantworter (10), eine Erfassung und Dekodierung (12) des von der Hauptstelle übermittelten Befehlsignals, sowie eine Verstärkung (13) des genannten zur Ausgangsschnittstelle (14) übermittelten Signals, eine die Ausführung des Befehls feststellende Schnittstelle (15), einen Multiplexer un Koder des Rücksignals (16), einen Frequenzgenerator (17), der die zwei Logikpegel des Rücksignals herstellt, das mittels geeigneter Verstärkung (18) in die Telephonleitung eingeleitet wird, aufweist.

2. Vorrichtung nach Anspruch 1 dadurch gekennzeichnet, daß die Hauptstelle 8 Schalter, die an einem Multiplexer und Adressenkoder angeschlossen sind und es erlauben 8 verschiedene Befehle, nicht gleichzeitig, abzugeben, sowie 8 Kontrollanzeigen aufweist, die es erlauben zu überprüfen, ob der Befehl ausgeführt worden ist.

3. Vorrichtung nach Anspruch 1 dadurch gekennzeichnet, daß die Hauptstelle 16 Schalter, die an einem Multiplexer und Adressenkoder angeschlossen sind und es erlauben 16 verschiedene Befehle, nicht gleichzeitig, abzugeben, sowie 24 Kontrollanzeigen aufweist.

4. Vorrichtung nach einem der Ansprüche 1 bis 3 dadurch gekennzeichnet, daß der Frequenzgenerator (3, 17) die verwendeten Frequenzen durch Teilung einer bei 1 MHz stabilisierten Leitfrequenz durch 19, in einer Teilerschaltung (20) generiert, um 52,631 Hz zu erhalten, wobei letztere Frequenz, zuerst, 3 mal durch 16 (22) geteilt wird, um die Taktfrequenz von 12,8 Hz zu erzeugen, zweitens, durch 28 geteilt wird, um den Logikpegel 1 von 1880 Hz zu erzeugen und, drittens, durch 29 geteilt wird, um den Logikpegel 0 von 1815 Hz zu erzeugen.

5. Vorrichtung nach einem der vorherigen Ansprüche dadurch gekennzeichnet, daß in der Hauptstelle die Frequenz von 12,8 Hz zweimal durch 5 (24) geteilt wird, um die Zeitbasis der vollständigen Periode von 0,5 Hz zu erhalten, und daß, am Ende einer jeden Periode, eine Schaltung (26) einen Impuls von 0,15 Sekunden liefert, der zur Synchronisation der Zeitbasen der beiden Stellen dient.

6. Vorrichtung nach einem der vorherigen Ansprüche dadurch gekennzeichnet, daß die Kodierung der Information so aufgebaut ist, daß sie eine Serie 0, die für das Steuersignal vorbehalten ist, eine Serie 1, die für die Kodierung der Adresse vorbehalten ist, und eine Serie 2, die für das Rücksignal vorbehalten ist, enthält, wobei die drei Serien sich zeitlich folgen, sodaß nur eine einzige Telephonleitung für die Hin- und Herübertragung verwendet wird.

7. Vorrichtung nach einem der vorherigen Ansprüche dadurch gekennzeichnet, daß die Schaltungen so aufgebaut sind, daß keine Spulen Verwendung finden.

8. Vorrichtung nach einem der vorherigen Ansprüche dadurch gekennzeichnet, daß die Eingangsschnittstelle (15) Opto-Koppler-Schaltungen aufweist.

9. Vorrichtung nach einem der vorherigen Ansprüche dadurch gekennzeichnet, daß sie eine Identifizierung aufweist, die aus einer Reihe Miniaturschalter besteht, die ein für allemal, beim Aufbau, geöffnet oder geschlossen werden.

10. Vorrichtung nach einem der vorherigen Ansprüche dadurch gekennzeichnet, daß das Erfassen des Signals (11,6) durch Frequenzdiskrimination mittels Überlagerung von Rechtecksignalen, die aus abgestimmten Verstärkern stammen, ausgeführt wird, wobei diese Signale nur bei der abgestimmten Frequenz übereinstimmen.

**Claims**

1. Remote control device using the telephone network as a transmission medium and making it possible to transmit signals in both directions between two stations, which it consists of a master station (Fig. 1) giving the instructions, which is connected to a first telephone station, and of a subordinate station (Fig. 2) receiving and executing the instructions and signalling the execution of the instructions, which is connected to a second telephone station, communication between these two stations using alternately only a single telegraph channel for outgoing and incoming transmission, and wherein the telephone line connecting the two stations is a conventional telephone line serving for conversation between two persons; and wherein the master station incorporates a suitable number of control switches, a frequency generator generating two frequency levels, namely the level 1 and the level 0 for the control signal which is transmitted to the telephone line with suitable amplification for the purpose of control, characterized in that said master station comprises a control device (6) for detecting the return signal and a device (7) for decoding this signal as well as a display (9) of the return signal (9), the control switches being connected to a multiplexer and an address coder, and in that the subordinate station incorporates a telephone answerer (10) detecting the ringing of the telephone station and signaling to the master station that the connection has been made, detection and decoding (12) of the control signal sent via the master station, and amplification (13) of the said signal sent to the output interface (14), an interface (15) establishing that the instruction has been executed, a multiplexer and a coder (16) of the return signal, and a frequency generator (17) generating the two logic levels for the return signal which is transmitted to the telephone line with suitable amplification (18).

2. Device according to claim 1, characterized in that the master station incorporates eight control switches, connected to a multiplexer and an address coder, making it possible to give eight different instructions non-simultaneously, and eight pilot lights making it possible to check whether the instruction has been executed.

3. Device according to claim 1, characterized in that the master station incorporates 16 control switches connected to a multiplexer and an addresse coder, making it possible to give 16 different instructions non-simultaneously, and 24 pilot lights.

4. Device according to any one of the claims 1 to 3, characterized in that the frequency generator (3, 17) generates the frequencies used by dividing a single pilot frequency, stabilized at 1 MHz by 19 in a divider circuit (20) to obtain 52,631 Hz, the latter being divided first three times by 16 (22) to obtain the clock frequency of 12.8 Hz, secondly by 28 to obtain the logic level 1 of 1880 Hz, and thirdly by 29 to obtain the logic level 0 of 1815 Hz.

5. Device according to any one of the preceding claims, characterized in that, at the master station, the frequency of 12.8 Hz is divided twice by 5 (24) to obtain the time base of the complete cycle of 0.5 Hz, and in that, at the end of each cycle, a circuit (26) supplies a pulse of 0.15 seconds serving for synchronizing the time bases of the two stations.

6. Device according to any one of the preceding claims, characterized in that the coding of the message is arranged in such a way that there is a series 0 which is reserved for the control signal, a series 1 which is reserved for the coding of the address and a series 2 which is reserved for the return signal, the three series succeeding one another in time in order to use only a single telephone line for outgoing and incoming transmission.

7. Device according to any one of the preceding claims, characterized in that the circuits are arranged so as not to use any coil.

8. Device according to any one of the preceding claims, characterized in that the input interface (15) incorporates opto-coupler assemblies.

9. Device according to any one of the preceding claims, characterized in that it incorporates an identification consisting of a set of miniature switches which are set open or closed once and for all at the time of installation.

10. Device according to any one of the preceding claims, characterised in that the detection of the signal (11,6) is detection with frequency discrimination by the superposition of rectangular signals coming from tuned amplifiers, these signals coinciding only at the tuning frequency.

FIG.1

FIG. 2

FIG.3

FIG.4

FIG. 5

FIG.6

0 113 347

FIG.7

13

FIG.8

FIG.9

112

114

+12

+12

+12

104

106

107

110

108

116

109

12v

ligne

+12